# EUROPÄISCHE PATENTSCHRIFT

(11) **EP 1 574 428 B1**
(45) Veröffentlichungstag und Bekanntmachung des Hinweises auf die Patenterteilung: **16.05.2007**
(21) Anmeldenummer: 05000968.7
(22) Anmeldetag: 19.01.2005
(51) Int. Cl.: B64D 11/06, B60N 2/44

(54) **Fluggastsitz**
Airplane passenger seat.
Siège pour passager d'avion.

(30) Priorität: 20.02.2004 DE 102004008267
(43) Veröffentlichungstag der Anmeldung: 14.09.2005
(73) Patentinhaber: Recaro Aircraft Seating GmbH & Co. KG, 74523 Schwäbisch Hall (DE)
(72) Erfinder: Baumann, Jürgen, 78351 Bodman-Ludwigshafen (DE)
(74) Vertreter: Bartels & Partner

(56) Entgegenhaltungen:
- US-A- 5 352 020
- US-A- 6 081 976
- US-A1- 2002 063 449
- US-A1- 2002 109 389

## Beschreibung

Die Erfindung bezieht sich auf einen Fluggastsitz mit Sitzkomponenten wie Rückenlehne, Sitzteil und an dessen vorderem Randbereich angelenkter Beinauflage, gemäß der Merkmalsausgestaltung des Oberbegriffes des Patentanspruches 1.

Fluggastsitze vergleichbarer Art sind bereits bekannt, vergleiche US-Patentschrift 5,352,020. Die Möglichkeit, die Gesamtlänge von Beinauflage und Fußstützenanordnung zu vergrößern, stellt dem Sitzbenutzer eine ausreichend lange Auflagefläche zur Verfügung, obwohl in der nach unten geklappten Nicht-Gebrauchsstellung für Beinauflage und Fußstützenanordnung lediglich die kurze, vom Sitzteil bis zum Kabinenboden reichende Baulänge zur Verfügung steht.

Bei dem bekannten Fluggastsitz der vorstehend erwähnten Art ist als eine Verschiebekraft an der Fußstützenanordnung erzeugender Antrieb ein Federkraftspeicher vorgesehen, der mittels eines vom Sitzbenutzer betätigbaren Steuerventils verriegelbar und entriegelbar ist. Bei entriegeltem Federkraftspeicher wirkt an der Fußstützenanordnung eine diese in die Beinauflage einfahrende Verschiebekraft. Um die Fußstützenanordnung bei der angehobenen Stellung auszufahren, muß der Sitzbenutzer mittels seiner Beinmuskulatur die Fußstützenanordnung bei entriegeltem Federkraftspeicher gegen die von diesem erzeugte Einfahrkraft in die gewünschte Gebrauchsstellung ausfahren und den Federkraftspeicher sodann durch Betätigen des Steuerventils verriegeln.

Da, um ein sicheres Einfahren zu gewährleisten, die vom Federkraftspeicher erzeugte Verschiebekraft ausreichend hoch bemessen sein muß, ergibt sich für den Sitzbenutzer der Nachteil der mühsamen Bedienbarkeit, weil für den Gebrauch der Fußstützenanordnung jeweils die Verschiebekraft überwunden werden muß.

Durch die US 2002/0109389 A1 ist ein gattungsgemäßer Fluggastsitz mit Sitzkomponenten bekannt wie Rückenlehne, Sitzteil und an dessen vorderem Randbereich angelenkter Beinauflage, die zwischen einer abgesenkten Nicht-Gebrauchsstellung und angehobenen Gebrauchsstellungen schwenkbar ist, und mit einer Fußstützenanordnung, die an der Beinauflage längs verschiebbar geführt, zwischen einer eingefahrenen Stellung und eine Verlängerung der Beinauflage bildenden, ausgefahrenen Stellungen bewegbar und mit einem Antrieb verbunden ist, der zwischen einem unwirksamen Ruhezustand und einem eine Verschiebekraft an der Fußstützenanordnung erzeugenden Wirkzustand umschaltbar ist, wobei ein umsteuerbarer, in zwei Wirkzustände schaltbarer Antrieb zum wahlweisen Erzeugen einer das Einfahren oder das Ausfahren der Fußstützenanordnung erzeugenden Verschiebekraft vorgesehen ist, und wobei der Antrieb einen die Drehrichtungsumkehr ermöglichenden elektrischen Getriebemotor aufweist. Die dahingehend bekannte Lösung benötigt für den Antrieb in Form eines Gewindespindeltriebes relativ viel Bauraum und ist schwer in der Realisierung.

Ausgehend von diesem Stand der Technik stellt sich die Erfindung die Aufgabe, einen Fluggastsitz der betrachteten Art zu schaffen, der sich durch eine besonders bequeme Bedienbarkeit auszeichnet, konstruktiv leicht baut und wenig Bauraum benötigt. Eine dahingehende Aufgabe löst ein Fluggastsitz mit den Merkmalen des Patentanspruches 1 in seiner Gesamtheit.

Dadurch, dass gemäß kennzeichnenden Teil des Patentanspruches 1 der Getriebemotor ein abtriebsseitiges Zahnritzel aufweist, das mit zwei zueinander parallel geführten Zahnstangen in Eingriff ist, deren eine endseitig mit der Struktur der Beinauflage und deren andere endseits mit der zu dieser bewegbaren Fußstützenanordnung jeweils gelenkig verbunden ist, ergibt sich für den gesamten Antrieb, d.h. für den Motor und das zugeordnete Antriebsgetriebe eine besonders kompakte Bauweise, so dass die Gesamtanordnung ohne konstruktive Schwierigkeiten in die Struktur der Beinauflage integrierbar ist.

Der erfindungsgemäße Fluggastsitz weist einen umsteuerbaren, in zwei Wirkzustände schaltbaren Antrieb auf, zum wahlweisen Erzeugen einer das Einfahren oder das Ausfahren der Fußstützenanordnung bewirkenden Verschiebekraft.

Während bei dem bekannten Fluggastsitz lediglich das Einfahren der Fußstützenanordnung antriebsseitig erfolgt, für das Einfahren also lediglich eine Steuerungsmaßnahme erforderlich ist, ermöglicht es die Erfindung, die Fußstützenanordnung auch in die gewünschte Gebrauchsstellung motorisch, d. h. durch eine einfache Steuermaßnahme ohne erforderlichen Kraftaufwand, zu überführen, so dass ein Höchstmaß an Bedienungsbequemlichkeit erreicht ist.

Bei bevorzugten Ausführungsbeispielen weist der Antrieb einen die Drehrichtungsumkehr ermöglichenden elektrischen Getriebemotor auf. Zur Steuerung ist somit lediglich die Bedienung einer elektrischen Schalteranordnung erforderlich, so dass höchste Bedienungssicherheit und -bequemlichkeit gewährleistet sind.

Eine besonders einfache Bauweise ergibt sich, wenn die Zahnstangen am Gehäuse des Getriebemotors verschiebbar geführt sind. Die Führung kann hierbei so ausgebildet sein, dass der Getriebemotor mit seinem Gehäuse auf den in ihm geführten Zahnstangen fliegend gelagert. Bei solcher Anordnung ergibt sich nicht nur der erstrebte kompakte Aufbau der gesamten Getriebeanordnung, sondern der weitere Vorteil, dass mittels der Zahnstangen/ritzel-Anordnung ein besonders hoher Verschiebeweg erzielbar ist, dessen Länge nur wenig geringer ist als die kombinierte Länge beider Zahnstangen.

Um größtmögliche Länge des Verschiebeweges zu erreichen, d. h. möglichst lange Zahnstangen zur Anwendung zu bringen, kann die Anordnung so getroffen sein, dass die Enden der Zahnstangen an der Struktur der Beinauflage und an der Struktur des Schlittens der Fußstützenanordnung jeweils an solchen Stellen angelenkt sind, dass sich die Zahnstangen bei der eingefahrenen Stellung der Fußstützenanordnung näherungsweise diagonal zur Rechteckfläche der Bodenteile von Beinauflage und Fußstützenanordnung erstrecken und somit der gesamte für die Unterbringung des Getriebes gegebene Bauraum optimal für die Baulänge der Zahnstangen ausgenützt ist.

Nachstehend ist die Erfindung anhand eines in der Zeichnung dargestellten Ausführungsbeispieles im einzelnen erläutert. Es zeigen:

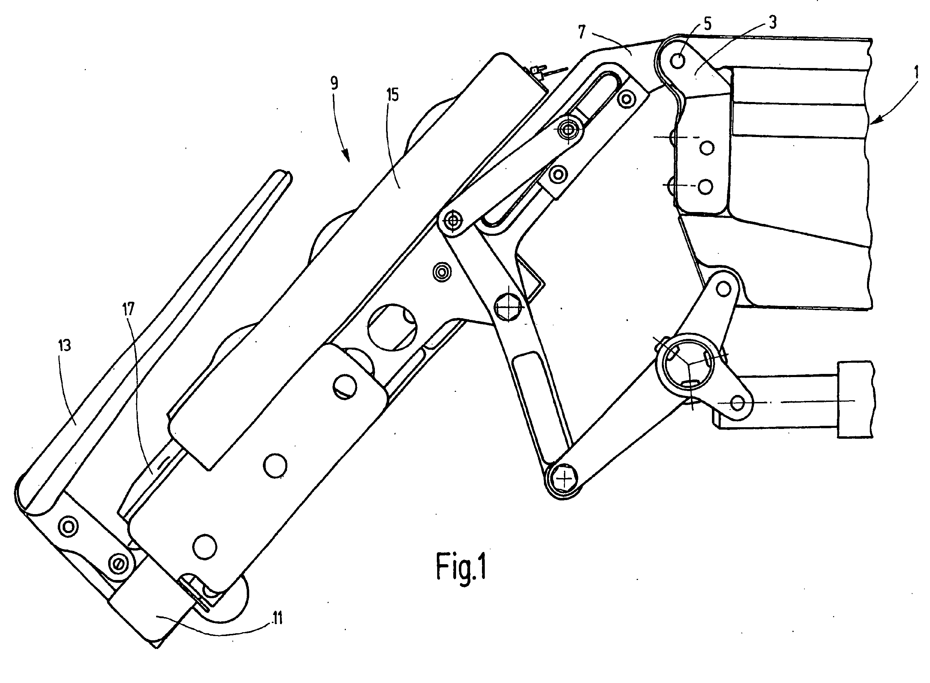

- Fig. 1 eine teils abgebrochen und schematisiert gezeichnete Seitenansicht nur des vorderen Randbereiches des Sitzteiles des Ausführungsbeispieles des erfindungsgemäßen Fluggastsitzes, ohne eingezeichnetes Sitzpolster, wobei sich die Beinauflage mit in sie eingefahrener Fußstützenanordnung in aus der Nicht-Gebrauchsstellung lediglich leicht angehobener Stellung befindet;

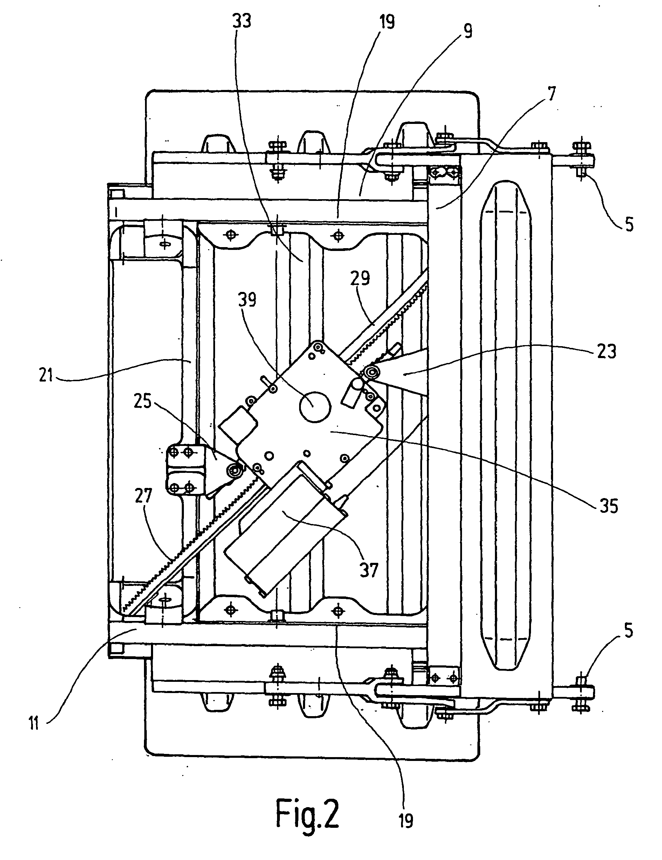

- Fig. 2 eine gegenüber Fig. 1 in kleinerem Maßstab gezeichnete Draufsicht der Beinauflage mit in sie eingefahrener Fußstützenanordnung, wobei Polsterträger von Beinauflage und Fußstützenanordnung weggelassen sind und somit der Einblick in die kastenartigen Strukturen von Beinauflage und Fußstützenanordnung freigegeben ist, und

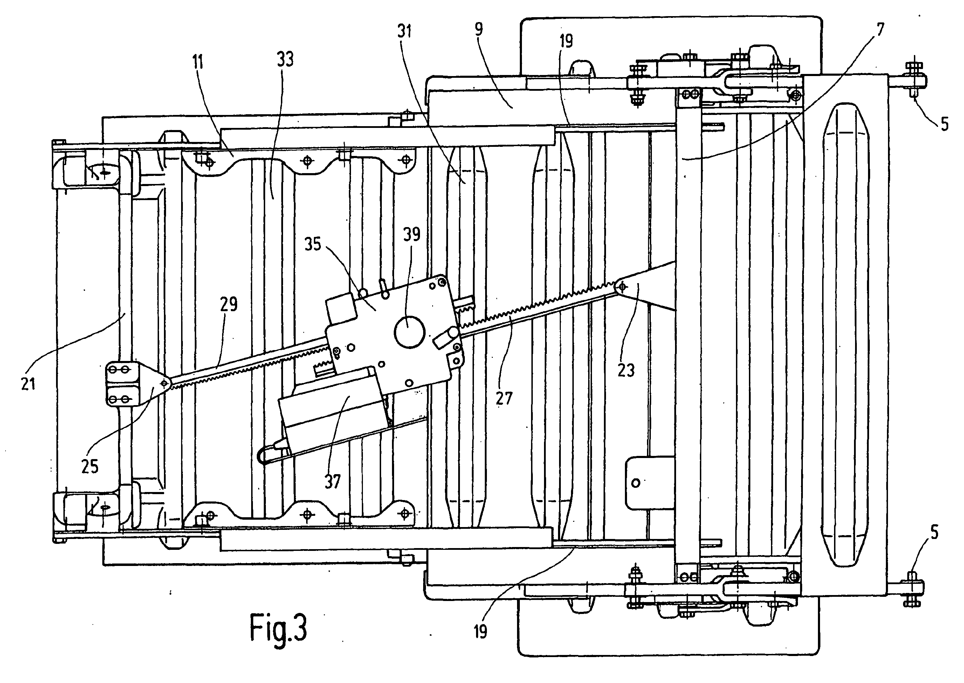

- Fig. 3 eine der Fig. 2 entsprechende Draufsicht, wobei jedoch die Fußstützenanordnung in voll ausgefahrener Stellung gezeigt ist.

In Fig. 1 ist der vordere Randbereich eines als Ganzes mit 1 bezeichneten Sitzteiles abgebrochen und ohne aufliegendes Sitzpolster gezeigt. An einer Anlenkstelle 3 des Randbereiches ist mittels Gelenkbolzen 5 das obere Ende einer Trägerstruktur 7 für eine schwenkbare Beinauflage 9 (Fig. 1) und eine in diese einfahrbare und aus ihr heraus ausfahrbare Fußstützenanordnung 11 dargestellt. Wie lediglich in Fig. 1 zu sehen ist, befindet sich am vorderen (unteren) Ende der Fußstützenanordnung 11 in an sich bekannter Weise ein abklappbares Trittflächenelement 13, das in Fig. 1 in angeklappter Position gezeigt ist.

In Fig. 1 ist ein Polsterträger der Beinauflage 9, der ohne Polsterüberzug gezeigt ist, mit 15 bezeichnet. Außerdem zeigt Fig. 1 den Endbereich eines Polsterträgers 17 der Fußstützenanordnung 11. In den Fig. 2 und 3 sind weder der Polsterträger 15 der Beinauflage 9 noch der Polsterträger 17 der Fußstützenanordnung 11 eingezeichnet, so dass der Blick ins Innere der Strukturen 7 und 21 von Beinauflage 9 bzw. Fußstützenanordnung 11 freigegeben ist, die beide in Art flacher Kasten ausgebildet sind, wobei die Fußstützenanordnung 11 teleskopartig passend in die Trägerstruktur 7 der Beinauflage 9 einfahrbar ist, deren Seitenwände 19 jeweils eine Verschiebeführung für die Struktur 21 der Beinauflage 11 bilden.

Wie aus Fig. 2 und 3 zu entnehmen ist, befindet sich an der Struktur 7 der Beinauflage 9 ein Schwenklager 23 und an der Struktur 21 der Fußstützenanordnung 11 ein Schwenklager 25. Am Schwenklager 23 der Beinauflage 9 ist das Ende einer Zahnstange 27 angelenkt, während am Schwenklager 25 der Fußstützenanordnung 11 eine gleichartige Zahnstange 29 gelenkig lagert ist. Die Lagerung der Zahnstangen 27 und 29 erfolgt hierbei so, dass sie in einer gemeinsamen Schwenkebene bewegbar sind, die parallel zur Hauptebene der Bodenteile 31 bzw. 33 der Struktur 7 der Beinauflage 9 bzw. der Struktur 21 der Fußstützenanordnung 11 verläuft. Die Zahnstangen 27 und 29 sind im Gehäuse 35 eines elektrischen Getriebemotors 37 so geführt, dass dessen abtriebsseitiges Zahnritzel (in Fig. 2 und 3 lediglich durch einen Kreis 39 versinnbildlicht), zwischen den Zahnstangen 27 und 29 befindlich, mit letzteren beiden in Zahneingriff ist.

Fig. 2 zeigt die Fußstützenanordnung 11 in ihrer in die Beinauflage 9 vollständig eingefahrenen Position. Wie ersichtlich, sind die Anlenkstellen der Zahnstangen 27, 29 an den Schwenklagern 23 bzw. 25 gegenüber der Hauptlängsachse von Beinauflage 9 und Fußstützenanordnung 11 so versetzt, dass sich die Zahnstangen 27 und 29 näherungsweise diagonal zu der durch den Bodenteil 33 der Struktur 21 definierten Rechteckfläche erstreckten, so dass der für die Unterbringung der Zahnstangen 27, 29 zur Verfügung stehende Einbauraum bestmöglich ausgenützt ist, so dass aufgrund der entsprechenden Länge der Zahnstangen 27, 29 ein erwünscht langer Verschiebeweg zur Verfügung steht.

Fig. 3 zeigt die Fußstützenanordnung 11 in der etwa zu 3/4 ihres Weges ausgefahrenen Position. Wie zu ersehen ist, steht für die Länge des Verschiebeweges annähernd die kombinierte Länge beider Zahnstangen 27, 29 zur Verfügung, so dass ausreichend große Ausfahrlänge trotz der im Einfahrzustand gegebenen Kompaktheit zur Verfügung steht. Wie ebenfalls beim Vergleich der Fig. 2 und 3 zu entnehmen ist, ist die Position der Einheit aus Getriebemotor 37 und Getriebegehäuse 35 relativ zu den Strukturen 7 und 21 ortsveränderlich. Dies ergibt sich dadurch, dass die Einheit aus Getriebemotor 37 und Getriebegehäuse 35 auf den Zahnstangen 27 und 29 fliegend gelagert ist.

Die beschriebene Ausbildung des Antriebes in Form eines Getriebemotors mit abtriebsseitigem Zahnritzel, das mit zwei parallelen Zahnstangen 27 in Eingriff ist, gewährleistet nicht nur eine große Ausfahrlänge trotz der geringen Baulänge, die durch den Abstand zwischen Sitzteil und Kabinenboden begrenzt ist, sondern führt zu einer besonders flachen Bauweise des Gesamtantriebes, so dass dieser ohne Schwierigkeiten in die kastenartigen Strukturen 7 und 21 von Beinauflage 9 bzw. Fußstützenanordnung 11 unterhalb von deren Polsterträgern 15, 17 eingebaut werden kann.

## Patentansprüche

1. Fluggastsitz mit Sitzkomponenten wie Rückenlehne, Sitzteil (1) und an dessen vorderem Randbereich (3) angelenkter Beinauflage (9), die zwischen einer abgesenkten Nicht-Gebrauchsstellung und angehobenen Gebrauchsstellungen schwenkbar ist, und mit einer Fußstützenanordnung (11), die an der Beinauflage (9) längs verschiebbar geführt, zwischen einer eingefahrenen Stellung und eine Verlängerung der Beinauflage (9) bildenden, ausgefahrenen Stellungen bewegbar und mit einem Antrieb (35, 37) verbunden ist, der zwischen einem unwirksamen Ruhezustand und einem eine Verschiebekraft an der Fußstützenanordnung (11) erzeugenden Wirkzustand umschaltbar ist, wobei ein umsteuerbarer, in zwei Wirkzustände schaltbarer Antrieb (35, 37) zum wahlweisen Erzeugen einer das Einfahren oder das Ausfahren der Fußstützenanordnung (11) erzeugenden Verschiebekraft vorgesehen ist, und wobei der Antrieb einen die Drehrichtungsumkehr ermöglichenden elektrischen Getriebemotor (35, 37) aufweist, **dadurch gekennzeichnet, dass** der Getriebemotor (35, 37) ein abtriebsseitiges Zahnritzel (39) aufweist, das mit zwei zueinander parallel geführten Zahnstangen (27, 29) in Eingriff ist, deren eine endseitig mit der Struktur (7) der Beinauflage (9) und deren andere endseits mit der zu dieser bewegbaren Fußstützenanordnung (11) jeweils gelenkig verbunden ist.

2. Fluggastsitz nach Anspruch 1, **dadurch gekennzeichnet, dass** die Zahnstangen (27, 29) am Gehäuse (35) des Getriebemotors (35, 37) verschiebbar geführt sind.

3. Fluggastsitz nach Anspruch 2, **dadurch gekennzeichnet, dass** der Getriebemotor (35, 37) mit seinem Gehäuse (35) auf den in ihm geführten Zahnstangen (27, 29) fliegend gelagert ist.

4. Fluggastsitz nach Anspruch 3, **dadurch gekennzeichnet, dass** die Struktur (7) der Beinauflage (9) in der Art eines oben offenen, flachen Kastens ausgebildet ist, dessen obere Seite durch einen Polsterträger (15) der Beinauflage (9) bedeckt ist und an dessen sich vom Polsterträger (15) zum Bodenteil (31) der Kastenstruktur (7) erstreckenden Seitenwänden (19) eine Verschiebeführung für die zwischen Polsterträger (15) und Bodenteil (31) in die kastenartige Struktur (7) einfahrbare Fußstützenanordnung (11) angeordnet ist.

5. Fluggastsitz nach Anspruch 4, **dadurch gekennzeichnet, dass** die Fußstützenanordnung (11) in der Art eines hohlkastenartigen Schlittens mit einem Bodenteil (33) ausgebildet ist, der sich in der in die Struktur (7) der Beinauflage (9) eingefahrenen Stellung eng benachbart zum Bodenteil (31) der Kastenstruktur der Beinauflage (9) erstreckt, so dass zwischen Bodenteil (33) der Fußstützenanordnung (11) und Polsterträger (15) der Beinauflage (9) Raum für den darin befindlichen Getriebemotor (35, 37) verbleibt.

6. Fluggastsitz nach Anspruch 5, **dadurch gekennzeichnet, dass** die Enden der Zahnstangen (27, 29) an der Struktur (7) der Beinauflage (9) und an der Struktur (21) des Schlittens der Fußstützenanordnung (11) relativ zu deren Hauptlängsachse an in Querrichtung so versetzten Anlenkstellen (23, 25) angebracht sind, dass sich die Zahnstangen (27, 29) bei der eingefahrenen Stellung der Fußstützenanordnung (11) näherungsweise diagonal zur Rechteckfläche der Bodenteile (31, 33) erstrecken.

## Claims

1. Airplane passenger seat with seat components such as a back rest, seat part (1) and a leg rest (9) fitted to the front edge area (3) of the same, being tiltable between a lowered non-usage position and a raised usage position, and with a foot support arrangement (11), held longitudinally displaceable between a retracted position and an extension of the leg rest (9) on the said leg rest (9), moveable in the extended position and connected with a drive (35, 37) between a non-active resting position and an active position generating a displacement force at the foot support arrangement (11), whereby a switchable drive (35, 37) that can be switched between two conditions is envisaged for the optional generation of a displacement force enabling the retracting or extending of the foot support arrangement (11), and whereby the drive comprises an electric gear motor (35, 37) enabling a rotation direction conversion, **characterised in that** the gear motor (35, 37) comprises an output side gear pinion (39) which engages two parallel gear rods (27, 29), each one of which is jointably connected with the structure (7) of the leg rest (9) at its one end, and with the foot support arrangement (11) to be moved with its other end.

2. Airplane passenger seat according to Claim 1, **characterised in that** the gear rods (27, 29) are displaceably held in the housing (35) of the gear motor (35, 37).

3. Airplane passenger seat according to Claim 2, **characterised in that** the gear motor (35, 37) with its housing (35) is moveably positioned on the gear rods (27, 29) held within the same.

4. Airplane passenger seat according to Claim 3, **characterised in that** the structure (7) of the leg rest (9) is designed in the way of a flat box open at the top, the upper side of which is covered by an upholstery support (15) of the leg rest (9), and on the side walls (19) of which, extending from the upholstery support (15) towards the floor part (31) of the box structure (7), a displacement guide for the foot support arrangement (11) can be retracted into the box-like structure (7) between the upholstery support (15) and the floor part (31).

5. Airplane passenger seat according to Claim 4, **characterised in that** the foot support arrangement (11) is designed in the way of a hollow box sledge with a floor part (33), which extends closely adjacent to the floor part (31) of the box structure of the leg support (9) in the position in which the same is retracted into the structure (7) of the leg support (9), so that room for the gear motor (35, 37) located within the same remains between the floor part (33) of the foot support arrangement (11) and the upholstery support (15) of the leg rest (9).

6. Airplane passenger seat according to Claim 5, **characterised in that** the ends of the gear rods (27, 29) are affixed to the structure (7) of the leg rest (9) and the structure (21) of the sledge of the foot support arrangement (11) relative to the main longitudinal axis of the same via tiltable bearings (23, 25) offset in transverse direction, so that the gear rods (27, 29) extend almost diagonally in relation to the rectangular surface of the floor parts (31, 33) in the retracted position of the foot support arrangement (11).

## Revendications

1. Siège pour passager d'avion ayant des composants de siège tels qu'un dossier, une assise (1) et, sur la zone de bordure (3) avant de celle-ci, un repose-jambes (9) articulé, pouvant basculer entre une position abaissée de non-utilisation et des positions relevées d'utilisation, et ayant un système de repose-pieds (11) qui, guidé de manière mobile en translation le long du repose-jambes (9), est déplaçable entre une position escamotée et des positions déployées formant un prolongement du repose-jambes (9) et est relié à un actionneur (35, 37), qui est réversible entre un état de repos inactif et un état actif appliquant une force de translation sur le système de repose-pieds (11), dans lequel il est prévu un actionneur (35, 37) réversible, commutable entre deux états fonctionnels pour produire au choix une force de translation provoquant l'escamotage ou le déploiement du système de repose-pieds (11), et dans lequel l'actionneur comporte un motoréducteur (35, 37) électrique permettant l'inversion du sens de rotation, **caractérisé en ce que** le motoréducteur (35, 37) a un pignon (39) situé côté sortie, qui engrène avec deux crémaillères (27, 29) guidées parallèlement l'une à l'autre, dont l'une est articulée, par une extrémité, à la structure (7) du repose-jambes (9) et l'autre est articulée, par une extrémité, au système de repose-pieds (11) déplaçable par rapport à celui-ci.

2. Siège pour passager d'avion selon la revendication 1, **caractérisé en ce que** les crémaillères (27, 29) sont guidées mobiles en translation sur le carter (35) du motoréducteur (35, 37).

3. Siège pour passager d'avion selon la revendication 2, **caractérisé en ce que** le motoréducteur (35, 37) avec son carter est monté mobile sur les crémaillères (27, 29) qui sont guidées dans celui-ci.

4. Siège pour passager d'avion selon la revendication 3, **caractérisé en ce que** la structure (7) du repose-jambes (9) est réalisée sous la forme d'une caisse plate, ouverte sur le dessus, dont la partie supérieure est recouverte par un support de rembourrage (15) du repose-jambes (9), et dont les parois latérales (19) s'étendant du support de rembourrage (15) à la partie de fond (31) de la structure de caisse (7) renferment un guidage en translation du système de repose-pieds (11) escamotable dans la structure (7) du genre caisse, entre le support de rembourrage (15) et la partie de fond (31).

5. Siège pour passager d'avion selon la revendication 4, **caractérisé en ce que** le système de repose-pieds (11) est réalisé à la manière d'un coulisseau du genre boîte creuse comprenant une partie de fond (33) qui, en position escamotée, s'étend dans la structure (7) du repose-jambes (9) de manière étroitement voisine de la partie de fond (31) de la structure de caisse du repose-jambes (9), de manière à ce qu'il reste de la place pour le motoréducteur se trouvant entre la partie de fond (33) du système de repose-pieds (11) et le support de rembourrage (15) du repose-jambes (9).

6. Siège pour passager d'avion selon la revendication 5, **caractérisé en ce que** les extrémités des crémaillères (27, 29) sont appliquées à la structure (7) du repose-jambes (9) et à la structure (21) du coulisseau du système de repose-pieds (11) au niveau des points d'articulation (23, 25) qui sont décalés en direction transversale par rapport à leur axe longitudinal principal de manière que, lorsque le système de repose-pieds (11) est dans la position escamotée, les crémaillères (27, 29) s'étendent à peu près en diagonale de la surface rectangulaire des parties de fond (31, 33).
